Europäisches Patentamt

European Patent Office

Office européen des brevets

(11) Veröffentlichungsnummer: **0 436 926 A2**

# (12) EUROPÄISCHE PATENTANMELDUNG

(21) Anmeldenummer: 90125407.8

(22) Anmeldetag: 21.12.90

(51) Int. Cl.⁵: **B60T 13/16, B60T 17/22, B60T 11/228, B60T 8/44**

(30) Priorität: 08.01.90 DE 4000324

(43) Veröffentlichungstag der Anmeldung:
17.07.91 Patentblatt 91/29

(84) Benannte Vertragsstaaten:
**DE FR GB IT SE**

(71) Anmelder: **Bayerische Motoren Werke Aktiengesellschaft Patentabteilung AJ-3 Postfach 40 02 40 Petuelring 130 W-8000 München 40(DE)**

(72) Erfinder: **Dietrich, Christian Renkenweg 2 W-8913 Schondorf(DE)**
Erfinder: **Unterforsthuber, Jakob Wettersteinstrasse 12 W-8031 Gernlinden(DE)**

(54) **Bremsanlage für Kraftfahrzeuge.**

(57)
2.1 In bekannten Bremsanlagen ist das Abgabevolumen des Hauptbremszylinders so ausgelegt, daß es für extreme Bremsbelastungen ausreichend groß ist. Aufgrund dieser Auslegung baut die Bremsanlage relativ groß und ist entsprechend teuer. Die neue Bremsanlage soll diese Nachteile vermeiden.

2.2 Dies wird dadurch erreicht, daß das Abgabevolumen des Hauptbremszylinders (6) auf einem für Normalbremsungen ausreichenden Wert ausgelegt ist und daß die zusätzliche Bremsflüssigkeit, die für extreme Bremsbelastungen benötigt wird, aus dem Ausgleichsbehälter (11) den Bremskreisen (14, 15) zuführbar ist.

EP 0 436 926 A2

Xerox Copy Centre

## BREMSANLAGE FÜR KRAFTFAHRZEUGE

Die Erfindung betrifft eine Bremsanlage für Kraftfahrzeuge gemäß dem Oberbegriff des Anspruchs 1.

Es sind bereits Bremsanlagen für Kraftfahrzeuge bekannt, die einen Bremskraftverstärker aufweisen, der über ein Pedal durch den Fahrzeuglenker betätigt wird. Das Bremspedal steht über den Bremskraftverstärker direkt mit dem Hauptbremszylinder in Verbindung. An den Hauptbremszylinder ist ein Ausgleichsbehälter angeschlossen, durch den Druckdifferenzen ausgeglichen werden können. Über Bremsleitungen wird der beim Bremsvorgang im Hauptbremszylinder aufgebaute Druck den jeweiligen Radzylindern der Bremsen an der Vorder- und Hinterachse zugeführt. Bei diesen bekannten Bremsanlagen ist es jedoch nachteilig, daß das Abgabevolumen des Hauptbremszylinders so bemessen ist, daß erhebliche Reserven für extreme Belastungsfälle verbleiben, die jedoch in der Praxis nur äußerst selten auftreten. Das große Abgabevolumen bedingt jedoch einen großen Durchmesser und eine relativ große Länge des Hauptbremszylinders. Daraus ergeben sich große Hübe der Kolben des Hauptbremszylinders, lange Pe dalwege und groß dimensionierte Bremskraftverstärker. Ferner fällt bei Überschreiten des Siedepunktes der Bremsflüssigkeit das Bremspedal durch.

Aufgabe der Erfindung ist es, eine Bremsanlage für Kraftfahrzeuge zu schaffen, die die oben genannten Nachteile vermeidet.

Diese Aufgabe wird erfindungsgemäß durch die kennzeichnenden Merkmale des Anspruchs 1 gelöst.

Durch die Verringerung des Abgabevolumens des Hauptbremszylinders auf einen für die Normalbremsungen ausreichenden Wert kann sowohl der Durchmesser als auch die Länge des Hauptbremszylinders im Vergleich zu einem bekannten Hauptbremszylinder klein gewählt werden. Im Extremfall kann entweder die Kolbenfläche oder die Länge des erfindungsgemäßen Hauptbremszylinders nur etwa halb so groß wie bei einem bekannten Hauptbremszylinder sein. Die Möglichkeit, sowohl den Durchmesser als auch gleichzeitig die Länge des Hauptbremszylinders kleiner auszulegen, ist vorteilhaft, weil im Gegensatz zum Stand der Technik, bei dem eine Verringerung des Durchmessers des Hauptbremszylinders zwangsläufig zu einer Vergrößerung der Länge des Hauptbremszylinders führt, auch der Pedalgesamtweg kleingehalten werden kann.Dies hat zur Folge, daß der zur Verfügung stehende Fahrzeuginnenraum größer sein kann. Aufgrund der geringeren Hauptbremszylinderfläche kann der Bremskraftverstärker kleiner dimensioniert werden. Dies ergibt sich daraus, daß der durch den Bremskraftverstärker zu erzeugende Leitungsdruck bei gegebener Eingangskraft umgekehrt proportional zur Hauptbremszylinderfläche ist. Durch die Verwendung eines kleineren Bremskraftverstärkers verringern sich die Fahrzeugkosten und das Fahrzeuggewicht. Ferner wird ein kleinerer Einbauraum für den Bremskraftverstärker benötigt, der im meist beengten Motorraum anderweitig nutzbar ist.

In extremen Belastungsfällen wird die zusätzlich benötigte Bremsflüssigkeit durch mindestens eine Förderpumpe in die beiden üblicherweise vorhandenen Bremskreise gefördert. Die Förderpumpe wird entweder durch einen Differenzdruckschalter bzw. einen Differenzdrucksensoroder durch einen Pedalwegschalter bzw. Pedalwegsensor gegebenenfalls über eine Steuer- und Regelungsschaltung betätigt.

Die Anzeige der Erschöpfung der Bremskreise kann durch akustische oder optische Warnanzeigen erfolgen. Diese Warnanzeigen können mit der Bremsbelagverschleißanzeige gekoppelt sein.

Durch die Möglichkeit der Zufuhr von Bremsflüssigkeit in nahezu beliebiger Menge können die in der Bremsflüssigkeit enthaltenen Dampfblasen komprimiert werden. Damit wird ein Durchfallen des Bremspedals verhindert. Ferner sind die Auswirkungen bei inneren und äußeren Leckagen geringer.

Das Prinzip läßt sich ohne weiteres mit herkömmlichen Anti-Blockiersystemen oder sonstigen Bremsregelsystemen kombinieren, wobei einige Komponenten dieser Regelsysteme für die Pumpeneinspeisung verwendbar sind, so z.B. die Pumpe und / oder der Wegsensor.

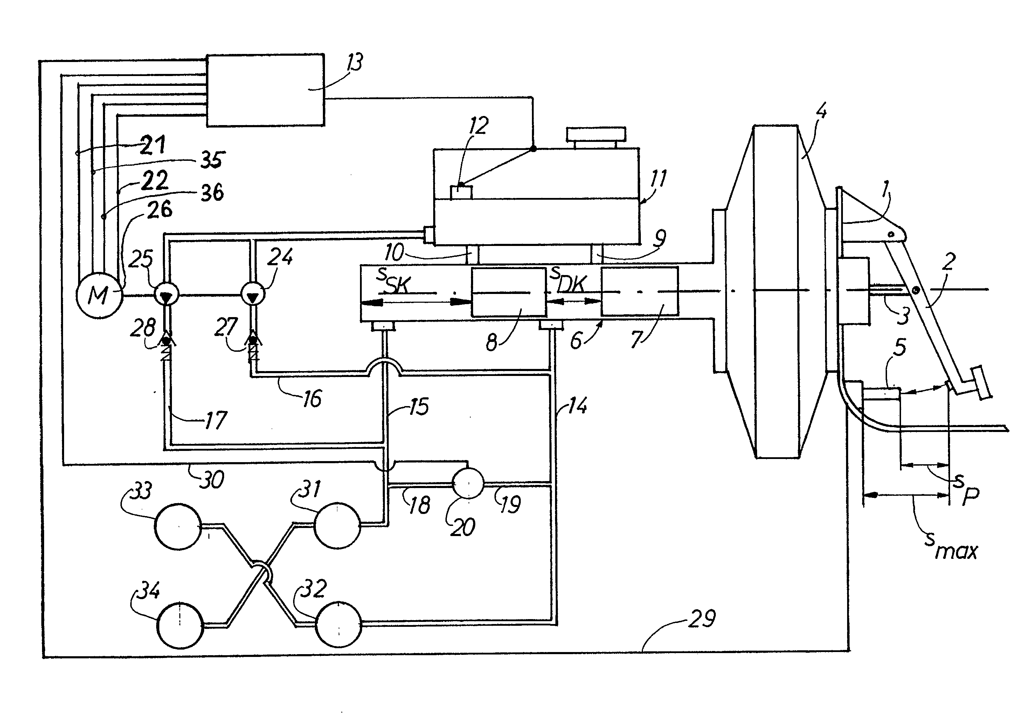

Eine Ausführungsform der Erfindung wird nachstehend anhand der einzigen Figur beispielshalber beschrieben, die einen schematischen Aufbau einer Bremsanlage für Kraftfahrzeuge zeigt.

Die Bremsanlage besteht aus einem an der Karosserie 1 eines Fahrzeuges gelenkig angeordneten Bremspedal 2, das über eine Kolbenstange 3 mit einem Bremskraftverstärker 4 verbunden ist. An der Karosserie 1 ist an der Fahrzeuginnenraumseite ein Pedalwegschalter 5 befestigt, dessen Abstand $s_p$ kleiner ist als der maximale Pedalweg $s_{max}$. An den Brems-

kraftverstärker 4 schließt sich ein Hauptbremszylinder 6 an, der einen Druckstangenkolben 7 und einen Schwimmkolben 8 aufweist. Ferner sind die Wege des Schwimmkolbens $s_{Sk}$ und des Druckstangenkolbens $s_{Dk}$ eingezeichnet. Der Hauptbremszylinder ist über Leitungen 9 und 10 mit einem Ausgleichsbehälter 11 verbunden. Im Ausgleichsbehälter 11 befindet sich ein Füllstandsmesser 12, der bei einem ausreichenden Füllstand und/oder bei einem minimalen Füllstand eine optische und/oder akustische Anzeige erzeugt. Zu diesem Zweck ist der Füllstandsmesser 12 an einer Vorrichtung 13 angeschlossen, die eine Sicherheitslogik, eine Steuerschaltung und eine Regelungsschaltung enthält. Vom Hauptbremszylinder 6 führt an jeden Bremskreis eine Leitung 14 bzw. 15 zu den damit in Verbindung stehenden Bremsen. Im vorliegenden Fall ist die Leitung 15 an die hintere rechte Bremse 31 und die vordere linke Bremse 34 angeschlossen. Entsprechend ist die Leitung 14 mit der hinteren linken Bremse 32 und der vorderen rechten Bremse 33 verbunden. Zwischen den Leitungen 14 und 15 ist über Leitungen 18 und 19 ein Druckdifferenzschalter 20 eingebaut. Ferner sind die Leitungen 14 und 15 jeweils über Leitungen 16 und 17 mit dem Ausgleichsbehälter 11 verbunden. In die Leitungen 16 und 17 sind jeweils eine Förderpumpe 24 und 25 eingebaut, die über einen Motor 26 angetrieben werden. Unterhalb der Pumpen 24 und 25 sind in Richtung der Bremsen Rückschlagventile 27 und 28 in den Leitungen 16 und 17 angeordnet.

Der Pedalwegschalter 5 und der Druckdifferenzschalter 20 sind über elektrische Leitungen 29 und 30 mit der Vorrichtung 13 und über Leitungen 35 und 36 mit dem Motor 26 verbunden. Ferner ist der Motor 26 über elektrische Leitungen 21, 22 mit der Vorrichtung 13 und dort insbesondere mit der Sicherheitslogik verbunden. In der Vorrichtung 13 werden die Signale aus dem Druckdifferenzschalter 20, dem Pedalwegschalter 5 und dem Füllstandsmesser 12 nach Häufigkeit und Dauer der Signale ausgewertet. In der Vorrichtung 13 können ferner die optischen und/oder akustischen Warnungen ausgelöst werden und der Betrieb des Motors 26 bzw. der Pumpen 24 und 25 überwacht werden. Insbesondere kann durch die Vorrichtung 13 die Pumpenlaufzeit bzw. die Häufigkeit der Pumpenläufe ermittelt werden.

In einer weiteren Ausführungsform kann die Versorgung der Bremskreise mit der benötigten Bremsflüssigkeit über nur eine Pumpe erfolgen. Zur Absicherung ist bei Ausfall eines Bremskreises ein hydraulisch und/oder elektrisch betätigtes Ventil in das Leitungssystem so eingebaut, daß der ausgefallene Bremskreis abgesperrt wird und die Pumpe nur noch in den intakten Bremskreis fördert.

Nachfolgend wird das Funktionsprinzip der Bremsanlage beschrieben. Das Abgabevolumen des Hauptbremszylinders 6 ist so bemessen, daß es für Normalbremsungen ausreichend ist. Zur Veranschaulichung der Verringerung des Abgabevolumens des Hauptbremszylinders werden anschließend die Auslegungsgrößen eines Hauptbremszylinders für ein Fahrzeug der Oberklasse mit einem Leergewicht von ca. 1800 kg, einer Höchstgeschwindigkeit von ca. 250 km/h und einem zulässigen Gesamtgewicht von ca. 2300 kg angeführt. Während der bekannte Hauptbremszylinder mit einem Durchmesser von 25,4 mm ein Nenn-Abgabevolumen von 16,4 $cm^3$ bei einem Hub von 35 mm aufweist, ist für den Hauptbremszylinder 6 ohne eine Volumenreserve für extreme Belastungsfälle ein Abgabevolumen von ca. 9 $cm^3$ ausreichend. Die niedrige Volumenanforderung kann durch drei Maßnahmen genutzt werden. Dies wird durch die folgenden drei Beispiele veranschaulicht:

1. Verringerung des Hauptbremszylinder-Hubes.

Beispielsweise kann der Hauptbremszylinder-Hub in dem oben angegebenen Beispiel von 35 mm auf 20 mm verringert werden. Dadurch verkürzt sich der Pedalweg von 150 mm auf 90 mm bei einer Pedalübersetzung von 4,0. Dies führt zu einem Innenraumgewinn von ca. 60 mm.

2. Reduzierung des Hauptbremszylinder-Durchmessers.

Der Hauptbremszylinder-Durchmesser kann in dem oben genannten Beispiel von 25,4 auf 19,05 mm verringert werden. Dadurch vergrößert sich der vom Bremskraftverstärker erzeugte Druck im Verhältnis der Hauptbremszylinder-Querschnittsflächen, d.h. im vorliegenden Fall um den Faktor 1,78. Statt eines 8"/9"-Tandembremskraftverstärkers genügt ein 9"-Einfachbremskraftverstärker.

3. Kombination der oben genannten Maßnahmen 1 und 2.

Eine Kombination der oben genannten Maßnahmen kann beispielsweise zu einer Reduzierung des Hauptbremszylinder-Durchmessers von 25,4 auf 20,64 mm, eine Verringerung des Hubes von 35 mm auf 29 mm und eine Änderung der Pedalübersetzung von 4,0 auf 2,8 führen. Damit ergibt sich ein Fahrzeuginnenraumgewinn von ca. 80 mm. Ferner kann statt einem 8"/9"-Tandembremskraftverstärker nunmehr ein 10"-Einfachbremskraftverstärker verwendet werden.

Bei mehreren Bremsungen aus hoher Geschwindigkeit, die kurz hintereinander erfolgen, würde das Hauptbremszylinder-Abgabevolumen ohne die beim Stand der Technik übliche Volumenreserve nicht ausreichen. Die fehlende Bremsflüssigkeitsmenge wird im Bedarfsfall über die Pumpen 24, 25 aus dem Ausgleichsbehälter 11 in die Leitungen 14 und 15 der Bremskreise eingespeist. Die Betätigung der Pumpen 24 und 25 über den Elektromotor 26 erfolgt über ein Signal, das entweder von dem Pedalwegschalter 5 oder dem Druckdifferenzschalter 20 erzeugt wird. Ebenso wird der Motor 26 durch ein Signal des Pedalwegschalters 5 bzw. des Druckdifferenzschalters 20 ausgeschaltet.

Der Druckdifferenzschalter löst dann ein Signal aus, wenn zwischen den Leitungen 14 und 15 eine Druckdifferenz besteht, die beispielsweise dadurch möglich ist, daß einer der beiden Kolben 7 oder 8 im Hauptbremszylinder 6 auf Anschlag geht, während beim anderen Kolben noch ein Reservehub zur Verfügung steht. Die Hubbegrenzung des auf Anschlag gegangenen Kolbens des Hauptbremszylinders bewirkt, daß zwischen den beiden Bremskreisen eine Druckdifferenz entsteht. Diese Druckdifferenz wird von dem Differenzdruckschalter erkannt und als Betätigungssignal für die Förderpumpe verwendet. Das von dem Druckdifferenzschalter 20 erzeugte Signal betätigt den Motor 26, der die Pumpen 24 und/oder 25 antreibt.

Durch die Pumpen 24 und 25 wird Bremsflüssigkeit in die Bremskreise eingespeist und die Druckdifferenz zwischen den beiden Bremskreisen bzw. den Leitungen 14 und 15 geht auf Null zurück. Ist die Druckdifferenz Null, sendet der Druckdifferenzschalter 20 ein Signal aus, das den Motor 26 ausschaltet. Dieser Vorgang wiederholt sich entsprechend der Bremsdruckerhöhung durch den Fahrer.

Sind beide Bremskreise gleichzeitig erschöpft, d.h. wenn beispielsweise beide Kolben auf Anschlag gegangen sind, dann wird der Druckdifferenzschalter 20 kein Steuersignal mehr abgeben. In diesem Fall übernimmt der Pedalwegschalter 5 die Betätigung des Motors 26 und der daran angeschlossenen Pumpen 24 und 25. Der Pedalwegschalter 5 wird betätigt, wenn das Pedal 2 einen Weg $s_P$ zurückgelegt hat, wobei der Pedalweg $s_P$ kleiner ist als der maximale Pedalweg $s_{max}$. Durch die Einspeisung von Bremsflüssigkeit in die Leitungen 14 und 15 wird das Pedal 2 zurückgedrückt und der Pedalwegschalter wird ausgeschaltet.

**Patentansprüche**

1. Bremsanlage für Kraftfahrzeuge, mit einem Hauptbremszylinder, der über einen Bremskraftverstärker durch ein Pedal betätigt wird, einem an den Hauptbremszylinder angeschlossenen Ausgleichsbehälter und mindestens einem mit dem Hauptbremszylinder verbundenen Bremskreis, dadurch gekennzeichnet, daß das Abgabevolumen des Hauptbremszylinders (6) auf einen für Normalbremsungen ausreichenden Wert ausgelegt ist und daß die zusätzliche Bremsflüssigkeit, die für extreme Bremsbelastungen benötigt wird, aus dem Ausgleichsbehälter (11) den Bremskreisen (14, 15) zuführbar ist.

2. Bremsanlage nach Anspruch 1, dadurch gekennzeichnet, daß Einrichtungen (5, 20) in der Bremsanlage vorgesehen sind, die beim Bremsvorgang feststellen, ob das Abgabevolumen des Hauptbremszylinders (6) ausreicht und die bei einem ungenügenden Abgabevolumen Signale erzeugen, die Vorrichtungen (24, 25, 26) betätigen, die die benötigte Bremsflüssigkeit aus dem Ausgleichsbehälter (11) den Leitungen (14 und 15) der Bremskreise zuführen.

3. Bremsanlage nach den Ansprüchen 1 oder 2, dadurch gekennzeichnet, daß die eine Einrichtung zum Feststellen einer ausreichenden Bremsflüssigkeitsmenge ein Pedalwegschalter (5) ist, der betätigt wird, bevor das Pedal (2) seinen maximalen Weg $s_{max}$ zurückgelegt hat.

4. Bremsanlage nach einem oder mehreren der vorhergehenden Ansprüche, dadurch gekennzeichnet, daß die andere Vorrichtung zum Feststellen einer ausreichenden Bremsflüssigkeitsmenge ein Druckdifferenzschalter (20) ist, der zwischen den Leitungen (14 und 15) der Bremskreise eingebaut ist und der bei einem Druckunterschied zwischen den Bremskreisen Signale erzeugt.

5. Bremsanlage nach einem oder mehreren der vorhergehenden Ansprüche, dadurch gekennzeichnet, daß die Leitungen (14, 15) der Bremskreise über Leitungen (16, 17) mit dem Ausgleichsbehälter (11) verbunden sind und daß die Bremsflüssigkeit über mindestens eine Pumpe (24, 25) in die Bremskreise förderbar ist.

6. Bremsanlage nach Anspruch 5, dadurch gekennzeichnet, daß bei einer Versorgung der der Bremskreise mit einer Pumpe ein hydraulisch und/oder elektrisch betätigtes Ventil in das Leitungssystem so eingebaut ist, daß bei Ausfall eines Bremskreises der ausgefallene Bremskreis abgesperrt wird und die Pumpe in den intakten Bremskreis Bremsflüssigkeit fördert.

7. Bremsanlage nach einem oder mehreren der vorhergehenden Ansprüche, dadurch gekennzeichnet, daß ein Rückschlagventil (27,28) im Anschluß an die Pumpe in die Leitung (16,17) eingebaut ist.

8. Bremsanlage nach einem oder mehreren der vorhergehenden Ansprüche, dadurch gekennzeichnet, daß akustische und/oder optische Anzeigen den Fahrer über den Belastungszustand der Bremskreise informieren.

9. Bremsanlage nach einem oder mehreren der vorhergehenden Ansprüche, dadurch gekennzeichnet, daß eine Vorrichtung (13) vorgesehen ist, die den Betrieb des Motors (26) und damit der Pumpen (24, 25) in Abhängigkeit der durch den Druckdifferenzschalter (20) bzw. durch den Pedalwegschalter (5) erzeugten Signale regelt bzw. steuert.

10. Bremsanlage nach einem oder mehreren der vorhergehenden Ansprüche, dadurch gekennzeichnet, daß die Vorrichtung (13) die Signale aus dem Druckdifferenzschalter (20), dem Pedalwegschalter (5) und dem Füllstandsmesser (12) nach Häufigkeit und Dauer der Signale auswertet.

11. Bremsanlage nach einem oder mehreren der vorhergehenden Ansprüche, dadurch gekennzeichnet, daß die Vorrichtung (13) die optischen und/oder akustischen Warnungen auslöst.

12. Bremsanlage nach einem oder mehreren der vorhergehenden Ansprüche, dadurch gekennzeichnet, daß die Vorrichtung (13) den Betrieb des Motors (26) bzw. der Pumpen (24 und 25) überwacht.

EP 0 436 926 A2